# FASCICULE DE BREVET EUROPEEN

(11) **EP 1 123 435 B1**
(45) Date de publication et mention de la délivrance du brevet: **12.01.2005**
(21) Numéro de dépôt: 99947518.9
(22) Date de dépôt: 08.10.1999
(51) Int. Cl.: D06M 15/05, D06M 15/07, C08J 7/04

(54) **PROCEDE POUR MODIFIER LE TOUCHER DE SURFACES OU ARTICLES TEXTILES EN MATIERE POLYMERIQUE SYNTHETIQUE**
VERFAHREN ZUR VERÄNDERUNG DES GRIFFS VON TEXTIL-OBERFLÄCHEN ODER -ARTIKEL AUS SYNTHETISCHEM POLYMEREM MATERIAL
PROCESS FOR MODIFYING THE HAND OF TEXTILE SURFACES OR ARTICLES MADE WITH SYNTHETIC POLYMERIC MATERIAL

(30) Priorité: 09.10.1998 FR 9812845
(43) Date de publication de la demande: 16.08.2001
(73) Titulaire: RHODIA CHIMIE, 92512 Boulogne Billancourt Cedex (FR)
(72) Inventeur: CHANZY, Henri, F-38700 La Tronche (FR); DEROO, Sophie, F-69006 Lyon (FR); FLEURY, Etienne, F-69540 Irigny (FR); LANCELON-PIN, Christine, F-38170 Seyssinet (FR); ROCHAT, Sandrine, F-69100 Villeurbanne (FR)
(74) Mandataire: Delos, Daniel
(86) Numéro de dépôt international: PCT/FR1999/002411
(87) Numéro de publication internationale: WO 2000/022224

(56) Documents cités:
- EP-A- 0 002 951
- WO-A-96/37653
- DE-B- 1 174 291
- US-A- 2 173 861

## Description

La présente invention concerne un procédé de traitement de surfaces ou articles textiles en un polymère synthétique pour en modifier le toucher.

Elle se rapporte plus particulièrement à un procédé de traitement permettant de déposer une couche de cellulose sur une surface ou un article en matériau polymérique synthétique.

Dans le domaine des surfaces textiles, les tissus, tricots et autres surfaces sont réalisées avec des fibres ou fils naturels tels que le coton, la soie, la laine par exemple ou des fibres artificielles telles que la viscose ou la rayonne. Ces fibres naturelles et artificielles présentent des propriétés qui confèrent au tissu un confort au porter, un toucher remarquable.

Ces surfaces textiles sont également réalisées à partir de fibres ou fils en matière synthétique qui présentent des propriétés mécaniques et de résistance aux agressions extérieures, telles que les solutions détergentes élevées. Ces fils ou fibres synthétiques peuvent être également fabriqués de manière très économique et avec une productivité élevée.

Toutefois, ces fibres synthétiques présentent un inconvénient majeur. En effet, sans traitement adapté ou conception particulière, les surfaces textiles obtenues à partir de telles fibres ont des propriétés de confort au porter et de toucher très médiocres et très éloignées de celles obtenues avec les fibres naturelles ou artificielles. De nombreux travaux ont été effectués pour proposer des solutions afin d'améliorer ses propriétés de confort et de toucher.

Les solutions proposées consistent soit à déposer sur la fibre ou la surface textile un ensimage ou apprêt, soit de modifier la matière synthétique pour lui conférer par exemple un caractère hydrophile.

D'autres solutions consistent à utiliser des fils obtenus à partir de fibres, appelés filés de fibre, ou des fils comprenant un entremêlement de filaments, permettant de rendre irrégulière la surface des fils et ainsi imiter la surface des fibres naturelles ou artificielles.

Il est connu d'améliorer la teinture et l'antistatisme des fils, fibres ... synthétiques par traitement à l'aide d'un solution d'acétate de cellulose dans l'acétone, puis évaporation du solvant et saponification de l'ester cellulosique à l'aide d'une solution ammoniacale (DE-A-1 174291). Il a aussi été proposé d'améliorer les propriétés antisalissure et de transport d'humidité des textiles en polyester ou nylon, par dépôt d'acétate de cellulose ayant un degré de substitution de 0,9 à 2,3 . L'acétate de cellulose est mis en oeuvre en solution dans un solvant organique. Le matériau textile « humide » est ensuite séché à une température qui n'excède pas la température de décomposition de l'acétate de cellulose (EP-A-002951).

Un but de la présente invention est de proposer une nouvelle solution pour modifier le toucher des surfaces ou articles en matière polymérique synthétique pour leur conférer des propriétés de toucher d'une matière naturelle comme le coton.

A cet effet, l'invention propose un procédé pour apporter à des surfaces ou articles textiles en matière polymérique synthétique des propriétés de toucher comparables à celles d'articles fabriqués à partir d'articles en fils ou fibres de coton, par mise en contact de ladite surface ou dudit article, avec une solution aqueuse d'au moins un ester de cellulose présentant un degré de substitution de 0,5 à 1,2 et un composé basique de précipitation de la cellulose choisi dans le groupe des bases et des sels alcalins, le rapport molaire composé basique de précipitation substituant ester de l'ester de cellulose étant supérieur à 5, de préférence supérieur à 10, précipitation de la cellulose sur la surface ou l'article par réaction de lyse des fonctions esters de l'ester de cellulose, séparation de la solution aqueuse, puis lavage et séchage desdites surfaces or articles.

Le procédé de l'invention consiste à traiter des articles ou surfaces comprenant au noins une surface en matière polymérique synthétique, tels que des fils, fibres, films en matière polymérique synthétique ou articles obtenus au moins à partir de ces fils, fibres ou films.

Le traitement de l'invention consiste donc à mettre en contact ladite surface ou ledit article en matière synthétique avec une solution aqueuse d'au moins un ester de cellulose, puis à provoquer la précipitation de cellulose sur la surface.

Par cellulose, on entend la cellulose régénérée à partir du ou des esters de cellulose contenus dans la solution. Cette cellulose précipitée peut être de la cellulose ou une cellulose modifiée, par exemple une cellulose contenant un ou plusieurs radicaux organiques liés à certains groupes hydroxyles de celle-ci.

Cette précipitation est obtenue par la régénération de la cellulose par coupure de liaison entre le ou les substituants esters de la cellulose et celle-ci. Cette coupure est obtenue par lyse des liaisons entre les substituants esters et la cellulose. Cette coupure est obtenue par addition d'un composé basique dans la solution induisant la précipitation de la cellulose.

Le revêtement de cellulose ainsi obtenu adhère sur la surface en matière polymérique synthétique et ne peut être éliminé au moins par lavage ou rinçage.

Le revêtement de cellulose procure ainsi à la surface traitée des propriétés de toucher comparable à celles des articles fabriqués à partir de fils, fibres de coton.

Le traitement de l'invention permet également d'améliorer notamment le caractère hydrophile des surfaces.

On entend par surfaces textiles, plus particulièrement des surfaces textiles obtenues par tissage, tricotage, flocage ou des surfaces non tissées, des feutres ou mats comprenant au moins des fils, fibres ou filés de fibres en matière synthétique.

Comme matière synthétique convenable pour l'invention on peut citer les polyamides aliphatiques, les polyamides aromatiques ou semi-aromatiques, les polyesteramides, polyimidazoles, les polyesters, les polyamide-imides.

A titre d'exemple de polyamides ou copolyamides convenables pour l'invention, on peut citer le polyadipamide d'hexaméthylène, le polycaprolactame, les copolymères de ces deux polyamides ou leurs'mélanges. Ces polyamides peuvent également comprendre d'autres unités récurrentes telles que des unités aromatiques sulfonates comme l'unité récurrente dérivée de l'acide sulpho-5 isophtalique ou analogue, ou des unités dérivées d'autres diacides carboxyliques comme les acides iso ou téréphtaliques ou diamines, comme la méthyl-5 pentaméthylène diamine.

Comme polyesters convenables, on peut citer le polyéthylène téréphtalate, les copolymères à base de polyéthylène téréphtalate et d'acide sulfo-5 isophtalique, les polyéthylène naphtalénate, les polypropylène naphtalénate, les polypropylène téréphtalate, les polybutytène téréphtalate, leurs mélanges ou copolymères.

A titre d'exemple de polyamide aromatique on peut citer les méta et paraphénylène téréphtalamide. La matière synthétique polyamide-imide permet notamment la fabrication de fibres commercialisées sous la marque KERMEL®.

Les matières synthétiques peuvent également être utilisés avec différents additifs tels que pigments, matifiants, agents de stabilisation chaleur ou lumière, des agents de protection chaleur, des agents anti-microbiens, des agents antisalissure ou analogue. Cette liste n'a aucun caractère exhaustif.

A titre de matières synthétiques préférées, on citera le polyadipamide d'hexaméthylène et les copolyamides ou mélange comprenant majoritairement des unités d'adipamide d'hexaméthylène, le polycaprolactame, les polyesters.

Selon un mode de réalisation, notamment pour le traitement des surfaces textiles déjà utilisées tels que tapis, moquettes, tissus de recouvrement, la solution de cellulose peut être déposée sur la surface à traiter par vaporisation, application par des appareils de nettoyage de surfaces.

Selon un autre mode de réalisation, mode préféré de l'invention, la mise en contact de la surface et de la solution d'esters de cellulose est obtenue par immersion de l'article dans ladite solution. Pour permettre le contrôle de la quantité de cellulose déposée, on peut utiliser la technique du foulardage qui permet d'exprimer la quantité de solution retenue par la surface.

Le traitement de l'invention peut être appliqué sur des surfaces textiles écrues ou teintes, avant ou après application d'apprêts.

La concentration pondérale en ester de cellulose dans la solution peut varier et n'est pas critique pour la mise en oeuvre de l'invention. Toutefois, cette concentration est avantageusement inférieure à la limite de solubilité de l'ester de cellulose.

Avantageusement, cette concentration pondérale est comprise entre 0,1 et 200 g/l.

Selon une caractéristique de l'invention, l'ester de cellulose est soluble dans l'eau. Cette solubilité est obtenue par traitement de la cellulose avec un agent d'estérification comme l'acide acétique ou l'anhydride acétique. Le degré de substitution qui représente le nombre de radical OH substitué par unité de cellulose varie, selon l'invention, entre 0,5 et 1,2.

D'autres agents de substitution, comme les propionates, acétopropionates, butyrates, acetobutyrates, sulfoacétates, esters d'acides gras peuvent également être utilisés.

La lyse des fonctions esters est obtenue par hydrolyse de ces fonctions par modification du pH de la solution par addition d'un composé basique de la famille des bases et des sels alcalins.

Selon un mode de réalisation préféré de l'invention, l'agent provoquant la précipitation de la cellulose est un sel provoquant la lyse de l'ester, par exemple, la désacétylation de la cellulose et donc son insolubilisation. Avantageusement ces sels comprennent d'une part un cation qui donne un sel soluble avec l'anion acétate et d'autre part un anion qui se décomposera en milieu aqueux. Comme anions préférés on peut citer à titre d'exemple, les anions carbonate, oxalate, hydrogénate, tartrate.

Comme cations, on citera à titre d'exemple les alcalins et plus particulièrement le sodium.

Le composé provoquant la précipitation est ajouté, dans un mode de réalisation préféré de l'invention, sous forme de solution aqueuse.

La quantité d'agent de précipitation ajoutée est en large excès par rapport à la quantité stoechiométrique nécessaire pour déplacer les substituants esters fixés sur la cellulose. Ainsi le rapport molaire agent de précipitation / substituants est supérieur à 5, de préférence supérieur à 10.

Après précipitation, la surface textile traitée est séparée de la solution par tout procédé connu. Cette surface est ensuite lavée puis séchée.

Selon une autre caractéristique de l'invention, l'ester de cellulose peut comprendre en plus d'autres substituants. Ce second type de substituants est lié à la cellulose par des fonctions non détruite lors de la modification des conditions de la solution pour provoquer la précipitation de la cellulose. Ainsi, ces substituants sont présents dans la cellulose déposée sur la surface à traiter.

Un des rôles de ces substituants est de fonctionnaliser la cellulose pour apporter de nouvelles propriétés à celle-ci ou renforcer certaines propriétés de la cellulose.

Avantageusement, des substituants sont liés à la cellulose par des fonctions éthers.

A titre d'exemple de fonctionnatisation on peut citer les fonctions carboxy, carboxyalkyle, alkyle, alkylaryle, hydroxyalkyle, aryle, cationique, sulfate, sulfonate, phosphorée, nitrile.

Dans le traitement de surfaces déjà utilisées, telles que tapis, moquettes, tissus de recouvrement, la solution de cellulose peut comprendre avantageusement d'autres additifs, notamment ceux usuellement présents dans les compositions pour le nettoyage de ce type de surfaces, comme des agents tensioactifs, des agents susceptibles d'enlever la salissure, des agents anti-taches ...

Le procédé de l'invention permet donc de modifier les propriétés de toucher des surfaces ou articles textiles en matière polymérique synthétique de manière durable. Cette modification est conservée après lavage des textiles. Dans le cas des surfaces textiles contenant des fils ou fibres en polyamide, le traitement de l'invention permet également de modifier la reprise en eau notamment de la surface.

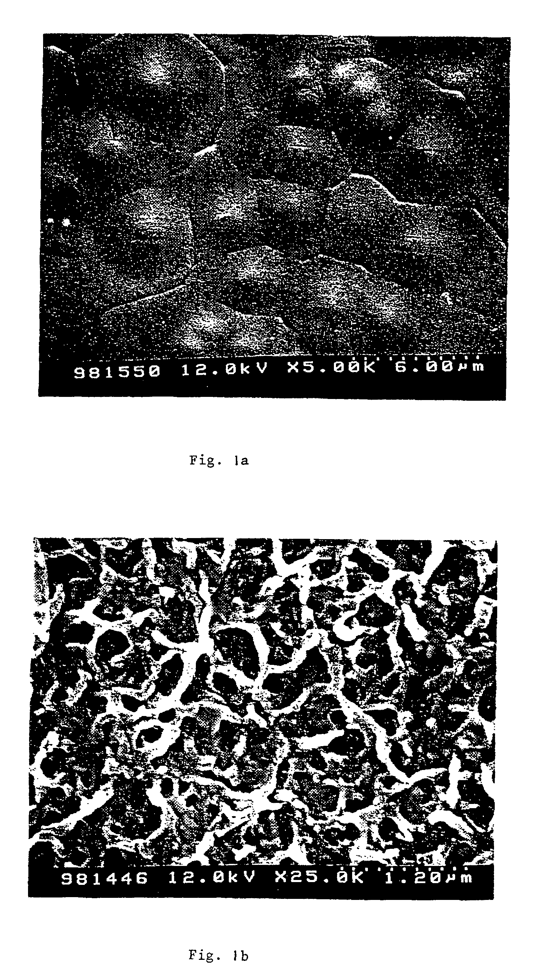

D'autres détails, avantage de l'invention sont illustrés par la description détaillée d'exemples de réalisation donnés uniquement à titre indicatif, et en référence à la figure 1 annexée représentant une vue en microscopie électronique à balayage de la surface d'un film métallisé à l'or, la figure la correspondant à un film polyamide non traité et la figure 1b à un film traité selon le procédé de l'invention.

Les exemples ci-dessous illustrent l'utilisation d'un acétate de cellulose comme dérivé de cellulose pour le traitement de surfaces, films ou tissus, réalisées à partir de matières synthétiques telles que polyamide ou polyester.

L'exemple 1 illustre la fabrication d'un acétate de cellulose soluble dans l'eau.

### Exemple 1 : préparation d'un acétate de cellulose A

Dans un réacteur, 340 ml d'acide acétique et 60 ml d'eau sont chauffés à 80°C, 63 grammes de triacétate de cellulose sont dissous dans cette solution acétique. Le milieu réactionnel est mélangé avec 140 ml de méthanol.

Le mélange réactionnel mis sous atmosphère inerte est maintenu sous une pression autogène à 150°C pendant 4 heures. Une nouvelle addition de 100 ml de méthanol est réalisée, le mélange étant maintenue sous une même pression et température pendant 8 heures.

Après refroidissement, l'acétate de cellulose est précipitée par addition d'acétone, puis récupéré par filtration et lavage.

Le degré de substitution et la masse moléculaire sont déterminés par analyse RMN du proton et chromatographie par perméation de gel.

L'acétate de cellulose ainsi préparé a un degré de substitution de 0,55 et une masse molaire en poids de 14000. Le produit est soluble dans l'eau.

### Exemple 2 : traitement d'un film en polyéthylène téréphtalate (PET)

Une solution aqueuse contenant 0,5 g/l d'acétate de cellulose A est chauffée à 40°C et mélangée à volume égal avec une solution aqueuse de carbonate de sodium à 2 g/l.

Un film de polyéthylène téréphtalate est immergé dans la solution ainsi préparée maintenue à 40°C sous agitation.

Après 90 minutes d'immersion, le film est retiré et rincé avec de l'eau puis séché.

L'hydrophilie de la surface du film est déterminée par mouillage en géométrie double-liquide.

Cette méthode consiste à immerger le film dans une cuve contenant du n-octane. Une goutte d'eau est déposée sur le film. Après 3 min. on mesure l'angle formé entre la goutte d'eau et le substrat. Cet angle dépend des tensions interfaciales des 2 liquides et de l'énergie de surface du support ; il reflète donc l'hydrophilie du film. Plus l'angle est faible, plus le support est hydrophile.

Un angle de 94° est mesuré sur le fil de PET traité, alors qu'une valeur de 120° est relevée sur un film non traité.

Le film de PET est donc hydrophilisé par précipitation de cellulose à sa surface.

### Exemple 3 : traitement d'un film en polyamide 6.6.

Une solution aqueuse contenant 0,5 g/l d'acétate de cellulose A, chauffée à 90°C est mélangée à volume égal, avec une solution de carbonate de sodium à 2 g/l. Un film de polyamide 6.6 est immergé dans ledit milieu maintenu à 90°C sous agitation pendant 5 minutes.

Après rinçage et séchage, le film présente une hydrophile de surface mesurée par la méthode décrite à l'exemple 2, et illustrée par un angle de 54°. Un angle de 84° est mesuré avec un film non traité.

La figure unique qui représente une vue en microscopie électronique à balayage de la surface métallisée à l'or d'un film non traité (fig. 1a) et du film selon l'exemple 3 (fig. 1b) illustre le dépôt de cellulose à la surface du film traité. Ce dépôt se présente sous la forme d'une couche poreuse dont le diamètre moyen des pores est d'environ 0,5 µm.

### Exemple 4 : traitement d'un film PA 6.6

L'exemple 3 est répété mais en utilisant une solution de carbonate de sodium à une concentration de 8 g/l et une solution d'acétate de cellulose à 2 g/l.

La température de traitement du film est de 40°C et la durée d'immersion est de 20 min.

L'angle mesuré de la goutte est de 32°, le même angle sur le film non traité étant de 84°.

### Exemple 5 : traitement d'un tissu en polyamide 6

De manière analogue, un milieu de traitement est obtenu par mélange à volume égal d'une solution aqueuse à 0,5 g/l d'acétate de cellulose A et d'une solution aqueuse de carbonate de sodium à 2 g/l.

Un tissu obtenu avec des fils en polyamide 6 est immergé dans ledit milieu maintenu sous agitation et à une température de 60°C.

Le tissu est retiré après 30 minutes puis rincé et séché.

L'hydrophilie de la surface textile est déterminée par la mesure du temps d'imbibition d'une goutte d'eau déminéralisée de 2 µl qui est déposée sur le tissu en atmosphère contrôlée (20°C, humidité relative 65 %). Plus ce temps est faible, plus le support est hydrophile.

Un temps de 51 s est mesuré sur un tissu PA non traité, alors qu'une valeur de seulement 13 s est relevée sur le tissu traité.

Ceci montre que la cellulose régénérée également sur le tissu en polyamide et modifie de manière substantielle son caractère hydrophile.

Après lavage du tissu ainsi traité avec une lessive habituellement utilisée dans le domaine du lavage des vêtements, la concentration de la lessive étant de 7 g/l, la température de lavage de 40°C et la durée de 20 minutes. Après rinçage, l'hydrophilie du tissu est à nouveau déterminée par la méthode décrite ci-dessus.

A titre comparatif, un tissu non traité a été soumis au même cycle de lavage/rinçage.

Les résultats du test sont un temps de 48 s pour le tissu non traité lavé et de 26 s pour le tissu traité lavé. Ce résultat démontre la persistance de l'effet du traitement après lavage.

## Revendications

1. Procédé pour apporter à des surfaces ou artices textiles en matière polymérique synthétique des propriétés de toucher comparables à celles d'articles fabriqués à partir d'articles en fils ou fibres de coton, par mise en contact de ladite surface ou dudit article avec une solution aqueuse d'au moins un ester de cellulose présentant un degré de substitution de 0,5 à 1,2 et un composé basique de précipitation de la cellulose choisi dans le groupe des bases et des sels alcalins, le rapport molaire composé basique de précipitation substituant ester de l'ester de cellulose étant supérieur à 5, de préférence supérieur à 10, précipitation de la cellulose sur la surface ou l'article par réaction de lyse des fonctions esters de l'ester de cellulose, séparation de la solution aqueuse, puis lavage et séchage desdites surfaces ou articles.

2. Procédé selon la revendication 1), **caractérisé en ce que** l'ester de cellulose est un acétate de cellulose.

3. Procédé selon la revendication 1) ou 2), **caractérisé en ce que** la concentration en ester de cellulose dans la solution est comprise entre 0,1 et 200 g/l.

4. Procédé selon l'une des revendications précédentes, **caractérisé en ce que** l'ester de cellulose comprend un second type de substituant lié à la cellulose par des liaisons ne pouvant être coupées.

5. Procédé selon l'une quelconque des revendications précédentes, **caractérisé en ce que** le composé basique de précipitation de la cellulose est un carbonate, oxalate, hydrogénate ou tartrate de métal alcalin.

6. Procédé selon la revendication 6), **caractérisé en ce que** le composé basique de précipitation de la cellulose est du carbonate de sodium.

7. Procédé selon l'une des revendications précédentes, **caractérisé en ce que** la mise en contact de la surface à traiter et de la solution est réalisée par immersion, par foulardage, par vaporisation, par application à l'aide d'un appareil de nettoyage de surface.

8. Procédé selon l'une des revendications précédentes, **caractérisé en ce que** la matière polymérique synthétique est choisie dans le groupe des matières synthétiques comprenant les polyamides aliphatiques, polyamides aromatiques, polyamides semi-aromatiques, polyesters, polyamide-imide, polyimidazoles.

9. Procédé selon l'une des revendications précédentes, **caractérisé en ce que** la surface textile est un tissu, un tricot, une surface non-tissée, un mat, une surface floquée, un feutre.

10. Procédé selon l'une des revendications précédentes, **caractérisé en ce que** la surface à traiter est écrue ou teintée.

## Patentansprüche

1. Verfahren, um textilen Oberflächen oder Gegenständen aus synthetischen Polymermaterialien einen Griff, der vergleichbar ist mit dem Griff von aus Baumwollfäden oder -fasern hergestellten Gegenständen, zu verleihen, durch Inkontaktbringen dieser Oberfläche oder dieses Gegenstandes mit einer wäßrigen Lösung mindestens eines Celluloseesters mit einem Substitutionsgrad von 0,5 bis 1,2 und einer basischen Fällungsverbindung der Cellulose, ausgewählt aus der Gruppe von Basen und alkalischen Salzen, wobei das Molverhältnis basische Fällungsverbindung/Estersubstituent des Celluloseesters größer als 5, vorzugsweise größer als 10 ist, Fällung der Cellulose auf die Oberfläche oder den Gegenstand mittels Lysereaktion der Esterfunktionen des Celluloseesters, Abtrennung der wäßrigen Lösung, dann Waschen und Trocknen der Oberflächen oder Gegenstände.

2. Verfahren nach Anspruch 1, **dadurch gekennzeichnet, daß** der Celluloseester ein Celluloseacetat ist.

3. Verfahren nach Anspruch 1 oder 2, **dadurch gekennzeichnet, daß** die Konzentration an Celluloseester in der Lösung zwischen 0,1 und 200 g/l liegt.

4. Verfahren nach einem der vorangehenden Ansprüche, **dadurch gekennzeichnet, daß** der Celluloseester einen zweiten Typ von Substituenten umfaßt, der an die Cellulose über nichttrennbare Bindungen gebunden ist.

5. Verfahren nach einem der vorangehenden Ansprüche, **dadurch gekennzeichnet, daß** die basische Fällungsverbindung der Cellulose ein Alkalimetallcarbonat, -oxalat, -hydrogenat oder -tartrat ist.

6. Verfahren nach Anspruch 5, **dadurch gekennzeichnet, daß** die basische Fällungsverbindung der Cellulose Natriumcarbonat ist.

7. Verfahren nach einem der vorangehenden Ansprüche, **dadurch gekennzeichnet, daß** das Inkontaktbringen der zu behandelnden Oberfläche mit der Lösung durch Eintauchen, Benetzen, Zerstäuben oder Auftragen mit Hilfe einer Oberflächenreinigungsvorrichtung erfolgt.

8. Verfahren nach einem der vorangehenden Ansprüche, **dadurch gekennzeichnet, daß** das synthetische Polymermaterial ausgewählt ist aus der Gruppe von synthetischen Materialien, umfassend aliphatische Polyamide, aromatische Polyamide, semiaromatische Polyamide, Polyester, Polyamidimide und Polyimidazole.

9. Verfahren nach einem der vorangehenden Ansprüche, **dadurch gekennzeichnet, daß** die textile Oberfläche ein Gewebe, eine Strick- bzw. Wirkware, ein Gewirke (Non-woven), eine Matte bzw. Faserfläche, eine geflockte Oberfläche oder ein Filz ist.

10. Verfahren nach einem der vorangehenden Ansprüche, **dadurch gekennzeichnet, daß** die zu behandelnde Oberfläche ungebleicht oder gefärbt ist.

## Claims

1. Process for providing textile surfaces or articles made of synthetic polymeric material with hand properties comparable to those of articles manufactured from articles made of cotton yarn or fibre, by bringing the said surface or the said article into contact with an aqueous solution of at least one cellulose ester having a degree of substitution from 0.5 to 1.2 and one basic cellulose precipitation compound chosen from the group of alkali metal salts and bases, the basic precipitation compound/ester substituent of the cellulose ester molar ratio being greater than 5, preferably greater than 10, by precipitating the cellulose on the surface or the article by lysis reaction of the ester functional groups of the cellulose ester, by separating the aqueous solution and then by washing and drying the said surfaces or articles.

2. Process according to Claim 1, **characterized in that** the cellulose ester is a cellulose acetate.

3. Process according to Claim 1 or 2, **characterized in that** the cellulose ester concentration in the solution is between 0.1 and 200 g/l.

4. Process according to one of the preceding claims, **characterized in that** the cellulose ester comprises a second type of substituent bonded to the cellulose by bonds that cannot be cut.

5. Process according to any one of the preceding claims, **characterized in that** the basic cellulose precipitation compound is an alkali metal carbonate, oxalate, hydrogenate or tartrate.

6. Process according to Claim 6, **characterized in that** the basic cellulose precipitation compound is sodium carbonate.

7. Process according to one of the preceding claims, **characterized in that** the contacting-of the surface to be treated with the solution is carried out by immersion, by padding, by vaporization or by application using a surface cleaning apparatus.

8. Process according to one of the preceding claims, **characterized in that** the synthetic polymeric material is chosen from the group of synthetic materials comprising aliphatic polyamides, aromatic polyamides, semi-aromatic polyamides, polyesters, polyamideimides and polyimidazoles.

9. Process according to one of the preceding claims, **characterized in that** the textile surface is a woven, a knit, a non-woven surface, a mat, a flocked surface or a felt.

10. Process according to one of the preceding claims, **characterized in that** the surface to be treated is undyed or dyed.
